# EUROPÄISCHE PATENTSCHRIFT

(11) **EP 2 030 919 B1**
(45) Veröffentlichungstag und Bekanntmachung des Hinweises auf die Patenterteilung: **04.04.2012**
(21) Anmeldenummer: 07450211.3
(22) Anmeldetag: 26.11.2007
(51) Int. Cl.: B65G 21/04

(54) **Förderanlage zum Transport von Gütern mittels eines Förderbandes**
Supply device for transporting cargo by means of a conveyor belt
Transporteur destiné au transport de marchandises à l'aide d'une bande de transport

(30) Priorität: 27.08.2007 AT 13432007
(43) Veröffentlichungstag der Anmeldung: 04.03.2009
(73) Patentinhaber: Innova Patent GmbH, 6960 Wolfurt (AT)
(72) Erfinder: Trieb, Herbert, 6911 Lochau (AT)
(74) Vertreter: Hehenberger, Reinhard

(56) Entgegenhaltungen:
- EP-A- 1 452 466
- EP-A1- 0 949 163
- EP-A1- 1 295 817

## Beschreibung

Die gegenständliche Erfindung betrifft eine Förderanlage zum Transport von Gütern mittels eines Förderbandes, welches an den beiden Enden der Anlage über Umlenktrommeln geführt ist und welches mit einem Paar von ersten Tragseilen ausgebildet ist, welche von in der Anlage vorgesehenen Stützen getragen sind und an welchen Trageinrichtungen für ein Paar von zweiten Tragseilen sowie für ein Paar von dritten Tragseilen befestigt sind, wobei das Förderband mit Querbalken ausgebildet ist, an deren Enden jeweils Laufrollen gelagert sind und wobei weiters die Laufrollen des vorlaufenden, beladenen Trumes des Förderbandes längs der zweiten Tragseile und die Laufrollen des rücklaufenden, unbeladenen Trumes des Förderbandes längs der dritten Tragseile abrollen.

Eine derartige Förderanlage ist z.B. aus der EP A1 1452466 bekannt. Bei dieser Förderanlage ist ein Paar von ersten Tragseilen vorgesehen, welche von Stützen getragen sind und an welchen Tragrahmen befestigt sind, von welchen ein Paar von zweiten Tragseilen und ein Paar von dritten Tragseilen getragen sind. Dabei ist das Förderband mit quer zu dessen Bewegungsrichtung ausgerichteten Tragbalken ausgebildet, an deren Enden sich jeweils Tragrollen befinden, wobei die Tragrollen des vorlaufenden, beladenen Trumes des Förderbandes längs der zweiten Tragseile abrollen und die Tragrollen des rücklaufenden, unbeladenen Trumes des Förderbandes längs der dritten Tragseile abrollen.

Derartige Förderanlagen sind weiters auch aus der EP 1295817 A1 und aus der EP 0949163 A1 bekannt.

Bei derartigen Förderanlagen, welche große Längen aufweisen können, sind über den Verlauf der Anlage Stützen vorgesehen, von welchen das Paar der ersten Tragseile getragen ist. Zwischen diesen Stützen verlaufen sämtliche Tragseile und das Förderband längs Kettenlinien. Da hierbei das Förderband beim Überfahren der Stützen sehr hohen Belastungen ausgesetzt ist, besteht das Erfordernis, dieses in den Bereichen der Stützen über Tragwalzen zu führen. Da diese Belastungen sowohl beim vorlaufenden, beladenen Trum des Förderbandes als auch beim rücklaufenden, unbeladenen Trum des Förderbandes auftreten, müssen somit im Bereich der Stützen beide Trume des Förderbandes über Tragwalzen geführt werden. Um auch das rücklaufende Trum des Förderbandes abstützen zu können, muss das Förderband nach der Entladestation nach oben gewendet werden. Dies bedeutet jedoch, dass in der Förderanlage nach der Entladestation und vor der Beladestation jeweils eine Wendeeinrichtung vorgesehen sein muss, wodurch ein zusätzlicher konstruktiver Aufwand und weiters im Betrieb der Förderanlage ein zusätzlicher wartungstechnischer Aufwand bedingt wird.

Der gegenständlichen Erfindung liegt somit die Aufgabe zugrunde, eine Förderanlage zu schaffen, bei welcher das rücklaufende Trum nicht durch Tragwalzen unterstützt zu werden braucht, sodass keine Wendeeinrichtungen erforderlich sind. Diese Aufgabe wird erfindungsgemäß dadurch gelöst, dass erste Tragrahmen vorgesehen sind, von welchen die zweiten Tragseile so getragen sind, dass sie zwischen den Tragstützen gleichfalls längs Kettenlinien verlaufen, und dass zweite Tragrahmen vorgesehen sind, von welchen die dritten Tragseile so getragen sind, dass sie über den Verlauf der Anlage angenähert geradlinig verlaufen.

Da die zweiten Tragseile gleichfalls längs Kettenlinien verlaufen, können sie ebenfalls Tragfunktionen erfüllen. Da demgegenüber die dritten Tragseile angenähert geradlinig verlaufen, erfüllen sie vorwiegend Führungsfunktionen für das rücklaufende, unbeladene Trum des Förderbandes. Da hierdurch das rücklaufende Trum angenähert geradlinig verläuft, besteht kein Erfordernis, dieses über Stützwalzen zu führen. Aus diesem Grund braucht weiters das Förderband nach der Entladestation nicht nach oben gewendet zu werden, sodass keine Wendeeinrichtungen erforderlich sind.

Vorzugsweise weisen die ersten Tragrahmen, welche an den ersten Tragseilen unmittelbar befestigt sind, zumindest angenähert gleiche Höhen auf, wodurch der Höhenverlauf der zweiten Tragseile längs der Anlage angenähert gleich dem Verlauf der ersten Tragseile ist. Weiters weisen vorzugsweise die zweiten Tragrahmen zumindest angenähert gleiche Höhen auf und sind sie mittels Tragelementen an den ersten Tragrahmen befestigt, wobei diese Tragelemente über den Verlauf der Anlage unterschiedliche Längen aufweisen, sodass die dritten Tragseile über den Verlauf der Anlage angenähert geradlinig verlaufen. Alternativ dazu sind die zweiten Tragrahmen gleichfalls an den ersten Tragseilen befestigt.

Nach einer weiters bevorzugten Ausführungsform sind die ersten Tragseile durch eine Mehrzahl von parallel verlaufenden Tragseilen gebildet. Weiters können auch die zweiten Tragseile durch eine Mehrzahl von zumindest angenähert horizontal nebeneinander angeordneten Tragseilen gebildet sein, wobei die an den Tragbalken vorgesehenen Tragrollen axial so gegeneinander versetzt sind, dass die Tragrollen eines ersten Tragbalkens längs ersten Tragseilen des zweiten Paares der Tragseile abrollen und die Tragrollen eines darauffolgenden Tragbalkens längs zweiten Tragseilen des zweiten Paares der Tragseile abrollen.

Der Gegenstand der Erfindung ist nachstehend anhand von in der Zeichnung dargestellten Ausführungsbeispielen näher erläutert. Es zeigen:
- FIG.1: eine erfindungsgemäße Förderanlage, in Seitenansicht;
- FIG.1a: ein Detail der Förderanlage gemäß FIG.1, in Längsrichtung der Anlage gesehen;
- FIG.2 und FIG.2a: einen Teil der Förderanlage gemäß FIG.1, in gegenüber FIG.1 vergrößertem Maßstab, in Seitenansicht und in Längsrichtung der Anlage gesehen;
- FIG.3: ein weiteres Detail der Förderanlage gemäß FIG.1, in Seitenansicht;
- FIG.4: eine Ausführungsvariante der Förderanlage gemäß FIG.1, in axonometrischer Darstellung.

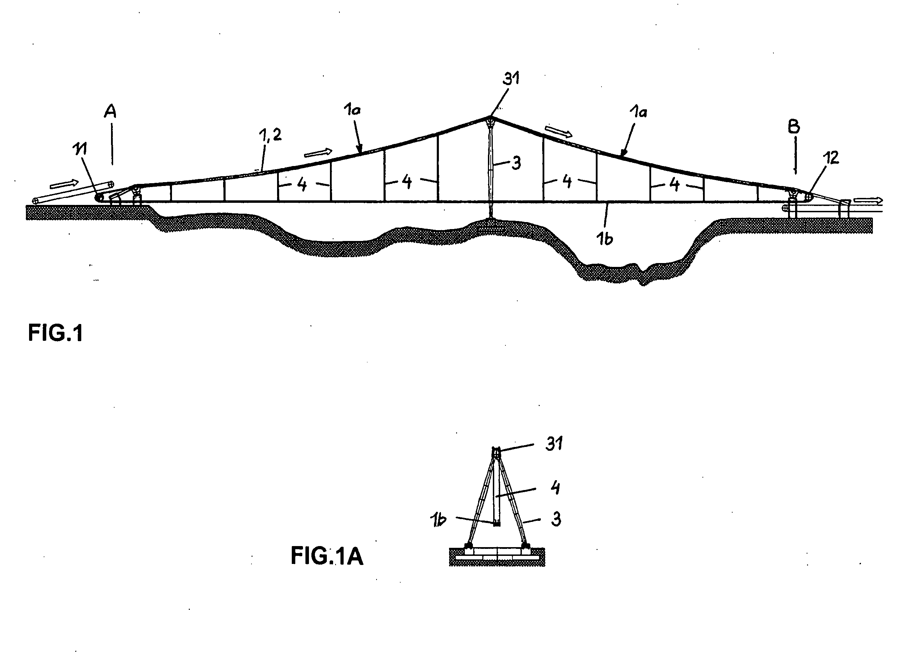

Aus den FIG.1 und FIG.1a ist eine schematisch dargestellte Förderanlage ersichtlich, mittels welcher Fördergut von einer Beladestation A zu einer Entladestation B transportiert wird. Hierfür ist ein in sich geschlossenes Förderband 1 vorgesehen, welches längs mindestens eines Paares von ersten Tragseilen 2 von der Ladestation A zur Entladestation B hinbewegt und von dieser zur Beladestation A zurückbewegt wird. Dabei wird das vorlaufende Trum 1a des Förderbandes 1 über den Verlauf der Förderanlage über an mindestens einer Stütze 3 befindliche Stützwalzen 31 geführt. Weiters befinden sich in der Beladestation A und in der Entladestation B Umlenktrommeln 11 und 12, über welche das Förderband 1 bewegt wird. Dabei verlaufen das mindestens eine Paar der Tragseile 2 und das vorlaufende Trum 1a des Förderbandes 1 längs Kettenlinien.

Bei bekannten derartigen Förderanlagen sind sowohl das vorlaufende Trum des Förderbandes als auch das rücklaufende Trum des Förderbandes über mindestens eine Stütze geführt. Da bei bekannten derartigen Förderanlagen das Förderband mit nach oben offenen Kammern für die Aufnahme des Fördergutes ausgebildet ist, wogegen es nur an seiner Unterseite mit einer ebenen Fläche ausgebildet ist, besteht bei derartigen Förderanlagen das Erfordernis, nach der Entladestation, in welcher das Förderband über eine Umlenktrommel geführt wird, wodurch die Förderkammern nach unten offen sind, eine Wendeeinrichtung vorzusehen, mittels welcher das Förderband nach oben gewendet wird, um es mittels seiner unteren Fläche über die an der mindestens einen Stütze vorgesehenen Abstützwalzen führen zu können. Weiters muss dann vor der Entladestation gleichfalls eine Wendeeinrichtung vorgesehen sein, mittels welcher das Förderband wieder gewendet wird, worauf es über eine in der Beladestation befindliche Umlenktrommel geführt wird und hierdurch in der Beladestation beladen werden kann.

Um demgegenüber bei der anmeldungsgemäßen Förderanlage auf in der Entladestation und in der Beladestation befindliche Wendeeinrichtungen verzichten zu können, ist bei der erfindungsgemäßen Förderanlage das rücklaufende Trum 1b des Förderbandes nicht über die mindestens eine Stütze 3 geführt, sondern ist es an dem mindestens einen Paar von ersten Tragseilen 2 mittels in ihrer Länge unterschiedlichen Trageinrichtungen 4 so befestigt, dass es zwischen der Entladestation B und der Beladestation A angenähert geradlinig verläuft.

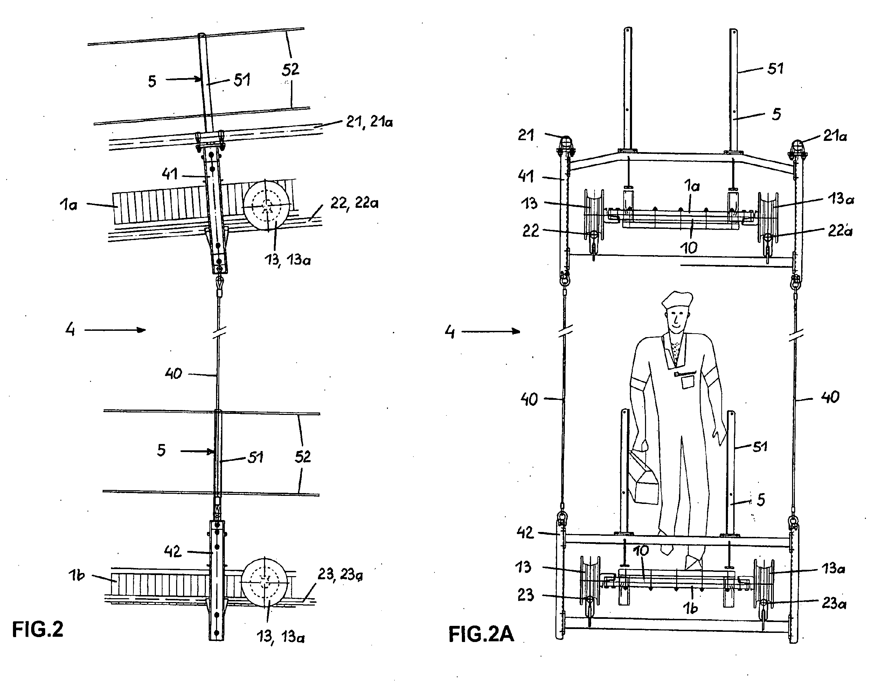

Wie dies aus den FIG.2 und FIG.2a ersichtlich ist, ist in der Förderanlage das Paar von ersten Tragseilen 21 und 21 a vorgesehen, an welchem die Trageinrichtungen 4 für die beiden Trume 1a und 1b des Förderbandes 1 befestigt sind. Die Trageinrichtungen 4 bestehen aus ersten Tragrahmen 41, welche an den ersten Tragseilen 21 und 21 a befestigt sind und an welchen Paare von zweiten Tragseilen 22 und 22a befestigt sind, über welche das vorlaufende Trum 1a des Förderbandes 1 bewegt wird. Hierfür sind am Förderband 1 voneinander im Abstand befindliche Tragbalken 10 vorgesehen, an welchen Tragrollen 13 und 13a gelagert sind, welche beim vorlaufenden Trum 1a des Förderbandes 1 über die beiden Tragseile 22 und 22a abrollen.

Weiters sind an den ersten Tragrahmen 41 mittels Tragelementen 40, wie Ketten oder Seilen, jeweils zweite Tragrahmen 42 befestigt, von welchen ein Paar von dritten Tragseilen 23 und 23a getragen ist, längs welcher die Tragrollen 13 und 13a des rücklaufenden Trumes 1b des Förderbandes 1 abrollen.

Die Tragseile 21 und 21a sowie die Tragseile 22 und 22a verlaufen über die Längserstreckung der Förderanlage längs Kettenlinien. Da die über die Längserstreckung der Förderanlage vorgesehenen, sich voneinander im Abstand befindlichen Tragelemente 40 unterschiedliche vertikale Längen aufweisen, verlaufen demgegenüber die Tragseile 23 und 23a zwischen der Entladestation B und der Beladestation A angenähert in einer geraden Linie, wodurch in der Bewegung des rücklaufenden Trumes 1b des Förderbandes 1 keine Abwinkelungen auftreten, in welchen es über Abstützwalzen geführt werden müsste.

Ergänzend wird darauf verwiesen, dass die Tragrahmen 41 und 42 zur Sicherung von Wartungspersonal mit Geländern 5, welche aus Pfosten 51 und Spannseilen 52 bestehen, ausgebildet sind.

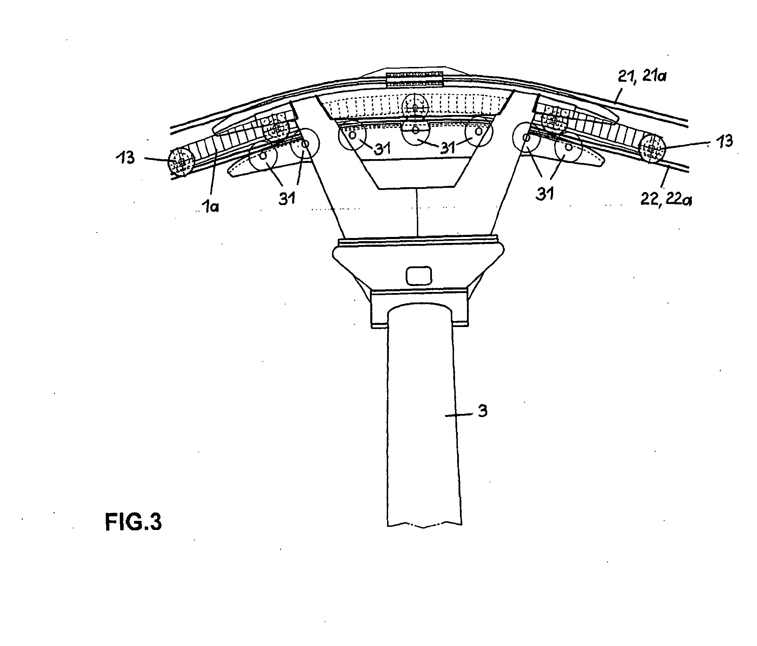

Aus FIG.3 ist ersichtlich, dass die ersten Tragseile 21 und 21 a ebenso wie die zweiten Tragseile 22 und 22a von Stützen 3 getragen sind und dass an den Stützen 3 zudem Tragrollen 31 gelagert sind, über welche das vorlaufende Trum 1a des Förderbandes 1 im Bereich der Stützen 3 geführt ist und dadurch abgestützt wird.

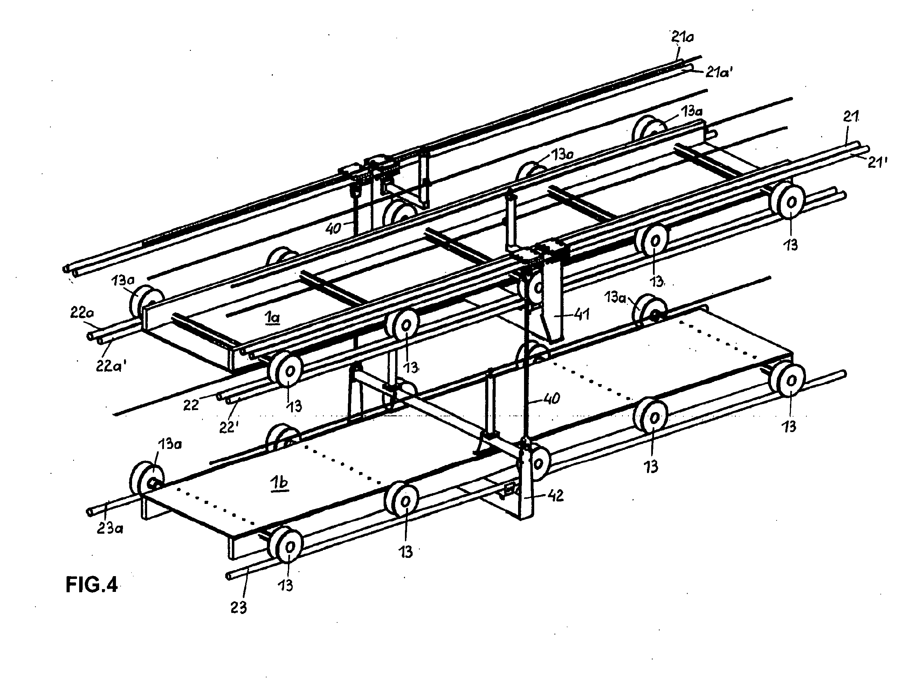

Anhand der FIG.4 ist nachstehend eine Ausführungsvariante eine Förderanlage gemäß den FIG.2 und 2a erläutert.
Bei dieser Ausführungsform sind die ersten Tragseile durch jeweils zwei Tragseile 21,21' und 21a,21a' gebildet, an welchen die Tragrahmen 41 befestigt sind. Weiters sind die von den Tragrahmen 41 getragenen Tragseile des zweiten Paares gleichfalls durch jeweils zwei Tragseile 22,22' und 22a,22a' gebildet, welche sich horizontal nebeneinander befinden. Weiters sind aufeinanderfolgende Tragrollen 13 und 13a des Förderbandes 1 derart axial gegeneinander versetzt, dass erste Tragrollen 13, 13a jeweils längs der Tragseile 22 und 22a und zweite Tragrollen 13, 13a jeweils längs der Tragseile 22' und 22a' abrollen. Weiters sind die darunter befindlichen Tragrahmen 42 mittels der Tragseile 40 gleichfalls an den jeweils zwei Paaren von ersten Tragseilen 21,21' und 21a,21a' befestigt. Von diesen Tragrahmen 42 sind jedoch nur zwei einzelne Tragseile 23 und 23a getragen, über welche jeweils zweite Tragrollen 13 und 13a abrollen. Da das zurücklaufende Trum 1b des Förderbandes 1 nicht beladen ist, ist es unmaßgeblich, dass nur jede zweite Tragrolle 13 und 13a über ein zugeordnetes Tragseil 23 und 23a geführt ist.

Da das rücklaufende Trum 1b des Förderbandes 1 nicht beladen ist, brauchen die dritten Tragseile 23 und 23a nur eine geringe Tragfunktion zu erfüllen, wodurch sie angenähert geradlinig verlaufen können. Dadurch verläuft auch das rücklaufende Trum 1b des Förderbandes 1 angenähert geradlinig, weswegen kein Erfordernis besteht, dieses über Stützwalzen zu führen. Dadurch braucht das Förderband 1 in der Entladestation nicht gewendet zu werden, weswegen in der Entladestation und in der Beladestation keine Wendeeinrichtungen vorgesehen zu sein brauchen. Hierdurch wird eine maßgebliche Vereinfachung der konstruktiven Gestaltung einer derartigen Förderanlage erzielt.

## Patentansprüche

1. Förderanlage zum Transport von Gütern mittels eines Förderbandes (1), welches an den beiden Enden der Anlage über Umlenktrommeln (11,12) geführt ist und welches mit einem Paar von ersten Tragseilen (21,21a) ausgebildet ist, welche von in der Anlage vorgesehene Stützen (3) getragen sind und an welchen Trageinrichtungen (4) für ein Paar von zweiten Tragseilen (22,22a) sowie für ein Paar von dritten Tragseilen (23,23a) befestigt sind, wobei das Förderband (1) mit Tragbalken (10) ausgebildet ist, an deren Enden jeweils Tragrollen (13,13a) gelagert sind und wobei weiters die Tragrollen (13,13a) des vorlaufenden Trumes (1a) des Förderbandes (1) längs der zweiten Tragseile (22,22a) und die Tragrollen (13,13a) des rücklaufenden Trumes (1b) des Förderbandes (1) längs der dritten Tragseile (23,23a) abrollen, **dadurch gekennzeichnet, dass** erste Tragrahmen (41) vorgesehen sind, von welchen die zweiten Tragseile (22,22a) so getragen sind, dass sie zwischen den Tragstützen (3) längs Kettenlinien verlaufen, und dass zweite Tragrahmen (42) vorgesehen sind, von welchen die dritten Tragseile (23,23a) so getragen sind, dass sie über den Verlauf der Anlage angenähert geradlinig verlaufen.

2. Förderanlage nach Patentanspruch 1, **dadurch gekennzeichnet, dass** die ersten Tragrahmen (41), welche an den ersten Tragseilen (21,21a) unmittelbar befestigt sind, zumindest angenähert gleiche Höhen aufweisen, wodurch der Höhenverlauf der zweiten Tragseile (22,22a) längs der Anlage angenähert gleich dem Verlauf des Paares der ersten Tragseile (21,21a) über den Verlauf der Anlage ist.

3. Förderanlage nach einem der Patentansprüche 1 und 2, **dadurch gekennzeichnet, dass** die zweiten Tragrahmen (42) zumindest angenähert gleiche Höhen aufweisen und dass sie mittels Zugelementen (40) an den ersten Tragrahmen (41) oder an den ersten Tragseilen (21,21a) befestigt sind, wobei diese Zugelemente (40) über den Verlauf der Anlage unterschiedliche Längen aufweisen, sodass die dritten Tragseile (23,23a) über den Verlauf der Anlage angenähert geradlinig verlaufen.

4. Förderanlage nach einem der Patentansprüche 1 bis 3, **dadurch gekennzeichnet, dass** die ersten Tragseile (21,21a) durch eine Mehrzahl von parallel verlaufenden Tragseilen gebildet sind.

5. Förderanlage nach einem der Patentansprüche 1 bis 4, **dadurch gekennzeichnet, dass** die zweiten Tragseile durch eine Mehrzahl von zumindest angenähert horizontal nebeneinander angeordneten Tragseilen (22,22' und 22a,22a') gebildet sind, wobei die an den Tragbalken (10) vorgesehenen Tragrollen (13,13a) von aufeinanderfolgenden Tragbalken (10) in axialer Richtung gegeneinander so versetzt sind, dass die Tragrollen (13,13a) eines ersten Tragbalkens (10) längs eines ersten Tragseiles der zweiten Tragseile (22,22' und 22a,22a') abrollen und die Tragrollen (13,13a) eines darauffolgenden Tragbalkens (10) längs eines horizontal daneben befindlichen zweiten Tragseiles der zweiten Tragseile (22,22' und 22a,22a') abrollen.

## Claims

1. A conveying installation for transporting goods by means of a conveyor belt (1), which belt is guided at both ends of the installation over return drums (11, 12) and which is provided with a pair of first carrying cables (21, 21a), which are borne by supports (3) provided in the installation and to which there are fastened carrying means (4) for a pair of second carrying cables (22, 22a) and for a pair of third carrying cables (23, 23a), the conveyor belt (1) being provided with carrying beams (10), at the ends of which there are in each case mounted carrying rollers (13, 13a), the carrying rollers (13, 13a) of the carrying run (1a) of the conveyor belt (1) furthermore rolling along the second carrying cable (22, 22a) and the carrying rollers (13, 13a) of the return run (1b) of the conveyor belt (1) rolling along the third carrying cable (23, 23a), **characterised in that** first carrying frames (41) are provided, by which the second carrying cables (22, 22a) are carried in such a way that they extend between the carrying supports (3) along catenaries, and **in that** second carrying frames (42) are provided, by which the third carrying cables (23, 23a) are carried in such a way that they extend approximately in a straight line over the course of the installation.

2. A conveying installation according to claim 1, **characterised in that** the first carrying frames (41), which are fastened directly to the first carrying cables (21, 21a), exhibit at least approximately identical heights, whereby the height profile of the second carrying cables (22, 22a) along the installation is approximately identical to the profile of the pair of first carrying cables (21, 21a) over the course of the installation.

3. A conveying installation according to any one of claims 1 and 2, **characterised in that** the second carrying frames (42) exhibit at least approximately identical heights and **in that** they are fastened by means of tension elements (40) to the first carrying frames (41) or to the first carrying cables (21, 21a), these tension elements (40) exhibiting different lengths over the course of the installation, such that the third carrying cables (23, 23a) extend approximately in a straight line over the course of installation.

4. A conveying installation according to any one of claims 1 to 3, **characterised in that** the first carrying cables (21, 21a) are formed by a plurality of carrying cables extending in parallel.

5. A conveying installation according to any one of claims 1 to 4, **characterised in that** the second carrying cables are formed by a plurality of carrying cables (22, 22' and 22a, 22a') arranged at least approximately horizontally next to one another, the carrying rollers (13, 13a), provided on the carrying beams (10), of successive carrying beams (10) being staggered axially relative to one another in such a way that the carrying rollers (13, 13a) of a first carrying beam (10) roll along a first carrying cable of the second carrying cables (22, 22' and 22a, 22a') and the carrying rollers (13, 13a) of a subsequent carrying beam (10) roll along a second carrying cable of the second carrying cables (22, 22' and 22a, 22a') located horizontally next thereto.

## Revendications

1. Transporteur pour le transport de marchandises à l'aide d'une bande de transport (1) qui passe, aux deux extrémités du transporteur, sur des tambours de renvoi (11, 12) et qui est pourvue d'une paire de premiers câbles porteurs (21, 21a) qui sont portés par des montants (3) prévus dans le transporteur et auxquels sont fixés des dispositifs porteurs (4) pour une paire de deuxièmes câbles porteurs (22, 22a) et pour une paire de troisièmes câbles porteurs (23, 23a), étant précisé que la bande de transport (1) est pourvue de poutres porteuses (10) aux extrémités desquelles sont montées des galets porteurs respectifs (13, 13a) et que par ailleurs les galets porteurs (13, 13a) du brin d'avance (1a) de la bande de transport (1) roulent le long des deuxièmes câbles porteurs (22, 22a) tandis que les galets porteurs (13, 13a) du brin de retour (1b) de la bande de transport (1) roulent le long des troisièmes câbles porteurs (23, 23a), **caractérisé en ce qu'**il est prévu des premiers châssis porteurs (41) par lesquels les deuxièmes câbles porteurs (22, 22a) sont portés de telle sorte qu'ils longent des caténaires entre les montants (3), et **en ce qu'**il est prévu des deuxièmes châssis porteurs (42) par lesquels les troisièmes câbles porteurs (23, 23a) sont portés de telle sorte qu'ils s'étendent à peu près en ligne droite sur le tracé du transporteur.

2. Transporteur selon la revendication 1, **caractérisé en ce que** les premiers châssis porteurs (41) qui sont fixés directement aux premiers câbles porteurs (21, 21a) présentent des hauteurs au moins approximativement égales, moyennant quoi le tracé en hauteur des deuxièmes câbles porteurs (22, 22a) le long du transporteur est approximativement égal à celui de la paire des premiers câbles porteurs (21, 21a) sur le tracé du transporteur.

3. Transporteur selon l'une des revendications 1 et 2, **caractérisé en ce que** les deuxièmes châssis porteurs (42) présentent des hauteurs au moins approximativement égales et **en ce qu'**ils sont fixés à l'aide d'éléments de traction (40) aux premiers châssis porteurs (41) ou aux premiers câbles porteurs (21, 21a), étant précisé que ces éléments de traction (40) présentent des longueurs différentes sur le tracé du transporteur, de sorte que les troisièmes câbles porteurs (23, 23a) s'étendent approximativement en ligne droite sur le tracé du transporteur.

4. Transporteur selon l'une des revendications 1 à 3, **caractérisé en ce que** les premiers câbles porteurs (21, 21a) sont formés par plusieurs câbles porteurs parallèles.

5. Transporteur selon l'une des revendications 1 à 4, **caractérisé en ce que** les deuxièmes câbles porteurs sont formés par plusieurs câbles porteurs (22, 22' et 22a, 22a') disposés côte à côte au moins approximativement à l'horizontale, étant précisé que les galets porteurs (13, 13a) prévus sur les poutres porteuses (10) successives sont décalés axialement les uns par rapport aux autres de telle sorte que les galets (13, 13a) d'une première poutre (10) roulent le long d'un premier câble porteur des deuxièmes câbles porteurs (22, 22' et 22a, 22a') tandis que les galets (13, 13a) d'une poutre (10) suivante roulent le long d'un deuxième câble porteur, situé horizontalement à côté, des deuxièmes câbles porteurs (22, 22' et 22a, 22a').
